# EUROPÄISCHE PATENTSCHRIFT

(11) **EP 0 866 238 B1**
(45) Veröffentlichungstag und Bekanntmachung des Hinweises auf die Patenterteilung: **22.08.2001**
(21) Anmeldenummer: 98810245.5
(22) Anmeldetag: 20.03.1998
(51) Int. Cl.: F16H 1/32, B25J 9/10

(54) **Reduktionsgetriebe**
Speed reducer
Réducteur de vitesse

(30) Priorität: 21.03.1997 CH 68197
(43) Veröffentlichungstag der Anmeldung: 23.09.1998
(73) Patentinhaber: Ruffner, Arno, 8320 Fehraltdorf (CH)
(72) Erfinder: Ruffner, Arno, 8320 Fehraltdorf (CH); Ruffner, Rico Ursin, 4500 Solothurn (CH)
(74) Vertreter: Riederer, Conrad A., Dr.

(56) Entgegenhaltungen:
- EP-A- 0 543 755
- EP-A- 0 710 782
- FR-A- 2 330 557
- US-A- 4 678 952
- US-A- 5 293 107

## Beschreibung

Die Erfindung betrifft ein Reduktionsgetriebe mit einem einen Aussendurchmesser aufweisenden Getriebegehäuse und einem darin integrierten Direktantriebsmotor sowie mit folgenden weiteren Merkmalen:
- der Direktantriebsmotor weist einen Stator und einen Rotor auf,
- der Rotor ist auf einem Antriebsorgan und der Stator in dem Getriebegehäuse angeordnet,
- das Antriebsorgan ist treibend verbunden mit mindestens einem Exzenter, welcher jeweils eine Kurvenscheibe antreibt,
- die jeweilige Kurvenscheibe ist mit einer Anzahl von Kurvenabschnitten oder Zähnen versehen,
- innerhalb des Getriebegehäuses sind in einem Kreis in Abständen voneinander stationäre Bolzen oder Zähne angeordnet, deren Anzahl mindestens um eins von der Anzahl der Kurvenabschnitte oder Zähne abweicht, und welche bei der Drehung des Exzenters mit den Kurvenabschnitten oder Zähnen zusammenwirken,
- ein Antriebsorgan ist mit der jeweiligen Kurvenscheibe treibend verbunden,
- und das Antriebsorgan weist eine zentrale Bohrung auf.

Die EP 0 710 782 beschreibt ein als Planetengetriebe ausgebildetes Reduktionsgetriebe, welches einen Motor, der im Gehäuse exzentrisch angeordnet sein kann. Das Gehäuse besitzt eine zentrale Durchgangsöffnung, die einen relativ geringen Durchmesser aufweist, aber den Durchgang von elektrischen Leitungen und Steuerleitungen gestattet.

Unter dem Namen "Harmonic-Drive" und "Cyclo-Drive" sind Reduktionsgetriebe bekannt, die sich von üblichen Reduktionsgetrieben dadurch unterscheiden, dass die Reduktion nicht durch Zahnräder üblicher Art vorgenommen wird. Diese neuen Arten von Reduktionsgetrieben haben den Vorteil, dass kein Spiel in der Verzahnung besteht, dass sie hohe Untersetzungsverhältnisse in einer Stufe aufweisen, dass An- und Abtrieb koaxial erfolgen und dass sie grosse Positionier- und Wiederholungsgenauigkeit besitzen. Weitere Vorteile sind kompakte Bauweise, geringes Gewicht und kleine Aussendurchmesser.

Ein "Harmonic-Drive"-Getriebe besteht im wesentlichen aus dem sogenannten Wave Generator, dem Flexspline, und dem Circular Spline. Als Wave Generator wird eine elliptische Stahlscheibe mit zentrischer Nabe und aufgezogenem elliptisch verformbaren Spezialkugellager genannt. Mit Flexspline wird eine zylindrische, verformbare Stahlbüchse mit Aussenverzahnung genannt. Als Circular Spline wird ein zylindrischer Ring mit Innenverzahnung bezeichnet. Im Betrieb des Getriebes verformt der elliptische Wave Generator über das Kugellager den Flexspline, der sich in den gegenüberliegenden Bereichen der grossen Ellipsenachse mit dem innenverzahnten, fixierten Circular Spline im Eingriff befindet. Mit dem Drehen des Wave Generators verlagert sich die grosse Ellipsenachse und damit der Zahneingriffsbereich. Da der Flexspline zwei Zähne weniger als der Circular Spline besitzt, vollzieht sich nach einer halben Umdrehung des Wave Generators eine Relativbewegung zwischen Flexspline und Circular Spline um die Grösse eines Zahnes und nach einer ganzen Umdrehung um die Grösse zweier Zähne. Bei stationärem Circular Spline dreht sich der Flexspline als Abtriebselement entgegengesetzt zum Antrieb.

Die "Harmonic Drive"-Getriebe sind auch mit Hohlwellen im Handel. Als nachteilig erweist sich jedoch, dass der Innendurchmesser der Hohlwelle nur etwa ein Drittel des Aussendurchmessers des Getriebes aufweist. Weiter nachteilig ist ferner die fehlende Robustheit dieser Art von Getriebe. Sie eignen sich nicht für hohe Drehmomente.

Demgegenüber sind die "Cyclo-Drive"-Getriebe wesentlich robuster. Aber obwohl seit über zwanzig Jahren insbesondere für Roboter ein erheblicher Bedarf für solche Getriebe mit einer zentralen Öffnung besteht, ist bis jetzt kein derartiges Getriebe geschaffen worden.

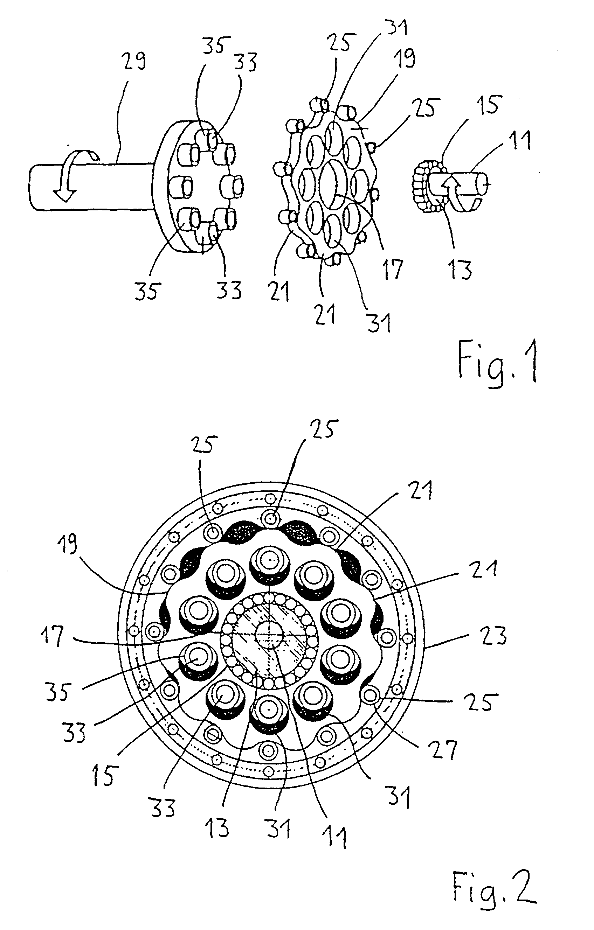

Nachfolgend wird nun unter Bezugnahme auf die Figuren 1 und 2 der Zeichnung das Funktionsprinzip des "Cyclo"-Getriebes erläutert. Die Figuren 1 und 2 sind der Broschüre "Cyclo-Drive 4000", 04/96, der Sumitomo Cyclo Europe, Seiten 6 und 7, entnommen.

Die Antriebswelle 11 treibt einen Exzenter 13 an. Der Exzenter 13 ist mittels eines Wälzlagers 15 in der Bohrung 17 der Kurvenscheibe 19 angeordnet. Die Kurvenscheibe 19 besitzt eine Anzahl von zykloiden Kurvenabschnitten 21. An einem mit dem Gehäuse 23 verbundenen Ring 24 sind in einem Kreis in Abständen voneinander Bolzen 25 angeordnet. Diese Bolzen 25 können mit Rollen 27 versehen sein. Die Zahl der Bolzen 25 ist um eins grösser als die Zahl der Kurvenabschnitte 21. Die Kurvenscheibe 19 ist mit der Abtriebswelle 29 gekuppelt. Zu diesem Zweck weist die Kurvenscheibe eine Anzahl von Bohrungen 31 auf, in welche Bolzen 33 der Abtriebswelle 29 ragen. Auf den Bolzen 33 befinden sich Rollen 35.

Im Betrieb läuft der Exzenter 13 mit der Antriebszahl um und treibt die Kurvenscheibe 19 an. Dabei entsteht eine Rotation der Kurvenscheibe 19 mit verminderter Drehzahl in umgekehrter Richtung. Bei einer vollen Umdrehung des Exzenters 13 wälzt sich die Kurvenscheibe 19 um einen Kurvenabschnitt 21 weiter. In der Regel hat die Kurvenscheibe 19 einen Kurvenabschnitt 21 weniger als Bolzen 25 vorhanden sind. Das Untersetzungsverhältnis wird durch die Anzahl der Kurvenabschnitte einer Kurvenscheibe bestimmt. Der Übertragung der untersetzten Drehbewegung der Kurvenscheibe 19 auf die Abtriebswelle 29 dienen die Bolzen 33, welche in die entsprechenden Bohrungen 31 der Kurvenscheibe eingreifen. Sowohl auf den Bolzen 25 als auch auf den Bolzen 33 sorgen die aufgesetzten Rollen 27 bzw. 35 für eine wälzende Kraftübertragung. Dadurch werden Reibungsverluste, Geräuschentwicklung und Verschleiss auf ein Minimum reduziert.

Das beschriebene Getriebe eignet sich besonders gut für die Übertragung relativ grosser Drehmomente und ist auch kurzfristig stark überbelastbar. Es hat aber den bereits angeführten Nachteil, dass es keine zentrale Öffnung besitzt, wie dies insbesondere für eine Anwendung auf Robotern erwünscht ist.

Es ist daher Aufgabe der vorliegenden Erfindung ein Getriebe von der Art eines sogenannten "Cyclo"-Getriebes oder ähnlichen Getriebes mit einer zentralen Öffnung zu schaffen, durch welche sich beispielsweise die Säule eines Roboters erstrecken kann.

Gemäss der Erfindung ist ein Reduktionsgetriebe der eingangs genannten Gattung dadurch gekennzeichnet, dass
- der Durchmesser der zentralen Bohrung 30% oder mehr des Aussendurchmessers des Getriebegehäuses beträgt, und dass
- im Getriebegehäuse eine ringförmige Encodervorrichtung angeordnet ist.

Dieses Reduktionsgetriebe hat gegenüber den "Harmonic-Drive"-Getrieben mit Hohlwellen den Vorteil, dass der Innendurchmesser bei relativ kleinem Aussendurchmesser sehr gross gehalten werden kann. Es ist möglich für solche Reduktionsgetriebe eine Massreihe für Innen- und Aussendurchmesser aufzustellen, ähnlich der ISO-Massreihe 18 und 19 für Wälzlager, bei welchen der Innendurchmesser in bezug auf den Aussendurchmesser besonders gross ist. Ein weiterer Vorteil des erfindungsgemässen Reduktionsgetriebes besteht darin, dass es die Robustheit der bekannten "Cyclo-Drive"-Getriebe besitzt, sich also für hohe Drehmomente eignet, wie sie für Industrieroboter gefordert werden. Die koaxiale Anordnung von Getriebe, Motor und ringförmiger Encodervorrichtung in Kombination mit einer grossen zentralen Öffnung, durch welche sich beispielsweise die Säule eines Roboters erstrecken kann, bietet dem Anwender erhebliche Vorteile. Durch die Anordnung der ringförmigen Encodervorrichtung im Getriebegehäuse ist diese von äusseren Einflüssen geschützt.

Zweckmässigerweise sind zwischen dem Gehäuse und dem Antriebsorgan Dichtringe vorgesehen, welche den Raum abdichten, in welchem sich der Direktantriebsmotor befindet. Dadurch wird dieser gut von äusseren Einflüssen geschützt.

Es können auch Dichtringe zwischen dem Gehäuse und dem Antriebsorgan vorgesehen sein, welche den Raum abdichten, in welchem sich der oder die Exzenter- und Kurvenscheiben befinden. Dieser Raum kann somit mit einem Schmiermittel gefüllt werden.

Zweckmässigerweise sind das Antriebs- und das Abtriebsorgan mittels Wälzlager auf der Hülse drehbar gelagert. Das Abtriebsorgan kann weiter mittels eines Wälzlagers auf dem Antriebsorgan gelagert sein. Dies gewährleistet einen hohen Wirkungsgrad des Reduktionsgetriebes.

Im Raum, in welchem der Direktantriebsmotor angeordnet ist, ist die Encodervorrichtung vorgesehen. Mit diesem Encoder kann antriebsseitig die Winkelstellung des Antriebsorgans festgestellt werden. Durch die Anordnung im genannten Raum ist die Encodervorrichtung von äusseren Einflüssen geschützt. Es ist möglich, auch auf der Abtriebseite eine Encodervorrichtung vorzusehen. Die Encodervorrichtungen können an eine Auswertschaltung angeschlossen sein, welche Getriebefehler, die bei Getrieben mit Kurvenscheiben auftreten, kompensiert und den Antriebsmotor entsprechend steuert.

Zweckmässigerweise besitzt das Gehäuse eine Büchse und einen Deckel, wobei der Deckel eine Nabe zur Befestigung auf der Hülse aufweist. Dies ergibt eine einfache und zweckmässige Konstruktion des Gehäuses. Zweckmässigerweise ist der Deckel zwischen dem Wälzlager für das Antriebsorgan und einem Sicherungsring angeordnet. Durch Entfernen des Sicherungrings ist für Unterhaltszwecke der Deckel leicht entfernbar um Zugang zum Motor oder zum Encoder zu erhalten.

Ein Ausführungsbeispiel der Erfindung wird nun unter Bezugnahme auf die Zeichnung beschrieben. Es zeigt:
- Fig. 1: eine Explosivdarstellung in schematischer Form eines "Cyclo-Drive" gemäss dem Stand der Technik,
- Fig. 2: eine Draufsicht auf einen "Cyclo-Drive" gemäss Figur 1,
- Fig. 3: einen Schnitt durch ein Reduktionsgetriebe mit einer zentralen Öffnung gemäss einem Ausführungsbeispiel der vorliegenden Erfindung.

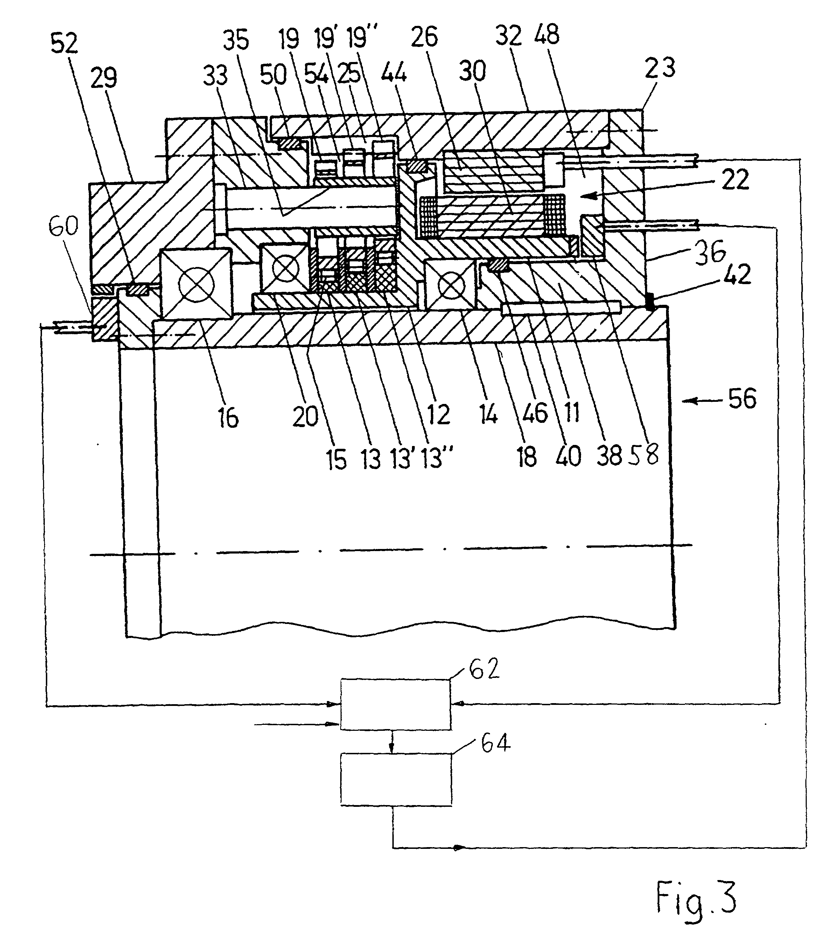

Das Reduktionsgetriebe gemäss Figur 3 besitzt ein Antriebsorgan 11 mit einer zentralen Bohrung 12. Antriebsorgan 11 und Abtriebsorgan 29 sind mittels Wälzlagern 14 bzw. 16 auf einer Hülse 18 gelagert. Das Abtriebsorgan 29 ist weiter mittels eines Wälzlagers 20 auf dem Antriebsorgan 11 gelagert. Für gewisse Anwendungen könne an Stelle der Wälzlager 14,16,20 auch Gleitlager zur Anwendung gelangen. Dem Antrieb des Antriebsorgans dient ein Direktantriebsmotor 22. Solche Direktantriebsmotoren (Direct Drive DC Motors) werden beispielsweise von der Firma Kollmorgen Inland Motor, Radford, Virginia 24141, USA, geliefert. Der Stator 26 des Motors 22 ist am Gehäuse 23 befestigt, der Rotor 30 auf dem Antriebsorgan 11. Wie ersichtlich, besteht das Gehäuse 23 aus einer hohlzylindrischen Büchse 32 und einem Deckel 36, der eine Nabe 38 aufweist und mit einem Keil 40 auf der Hülse 18 drehfest gelagert ist. Der axialen Sicherung des Deckels 36 dient ein Sicherungsring 42. Zwischen dem Gehäuse 23 und dem Antriebsorgan 11 sind Dichtungsringe 44,46 vorgesehen, welche den Raum 48 abdichten, in welchem der Direktantriebsmotor 22 angeordnet ist. Dichtungsringe 50,52 zusammen mit dem Dichtungsring 44 dichten den Raum 54 ab, in welchem die Exzenter 13,13',13" angeordnet sind.

Im Gegensatz zum eingangs mit Bezugnahme auf die Figuren 1 und 2 beschriebenen "Cyclo"-Getriebes sind beim vorliegenden Getriebe drei versetzt zueinander angeordnete Exzenter 13,13',13" und Kurvenscheiben 19,19',19" mit Kurvenabschnitten 21 wie in Figur 1 und 2 vorgesehen. Die Wirkungsweise des Getriebes bleibt jedoch dieselbe, so dass diesbezüglich auf die Figuren 1 und 2 und die vorangehende Beschreibung verwiesen werden kann. Aus dem gleichen Grunde werden für Teile mit gleichen Funktionen identische Bezugszeichen verwendet.

Wesentlich ist, dass das beschriebene Reduktionsgetriebe mit oder ohne integriertem Antriebsmotor 22 eine zentrale Öffnung 56 mit einem Innendurchmesser aufweist, der in bezug auf den Aussendurchmesser des Getriebes relativ gross ist, z.B. von 30 oder mehr Prozent vom Aussendurchmesser aufweist. Durch diese zentrale Öffnung 56 kann sich dann beispielsweise die Säule eines Roboters erstrecken. Es ist möglich, eine Reihe von Reduktionsgetrieben zu bauen, bei welchen die Differenz zwischen Aussendurchmesser und Innendurchmesser konstant bleibt, z.B. 80 mm beträgt. So kann beispielsweise bei einem Aussendurchmesser von 180 mm der Innendurchmesser 100 mm betragen; oder beispielsweise bei einem Aussendurchmesser von 300 mm der Innendurchmesser 220 mm.

Im Raum 48 ist eine Encodervorrichtung 58 angeordnet. Eine weitere Encodervorrichtung 60 befindet sich auch beim Abtriebsorgan 29. Diese Encodervorrichtungen 58,60 sind an eine Auswertschaltung 62 angeschlossen, welche die Aufgabe hat, Getriebefehler zu kompensieren und über eine Treiberschaltung 64 den Antriebsmotor, also beim gezeigten Beispiel den Direktantriebsmotor 22, entsprechend zu steuern. Dadurch wird eine hohe Positioniergenauigkeit erreicht.

Die Erfindung ist nicht auf das gezeigte Ausführungsbeispiel beschränkt. So ist es möglich, das Prinzip des sogenannten "Cyclo"-Getriebes auch mit anderen Mitteln zu realisieren. So kann die Kurvenscheibe 19 die Form eines Zahnrades, vorzugsweise mit Evolventenverzahnung, aufweisen, und an Stelle der Bolzen 25 kann ein Zahnrad mit Innenverzahnung vorgesehen sein, dessen Anzahl der Zähne mindestens um eins von der Anzahl der Zähne des Zahnrads 19 abweicht.

Zusammenfassend wird folgendes festgehalten:

Das Reduktionsgetriebe besitzt ein auf einer Hülse 18 drehbar gelagertes Antriebsorgan 11. Auf diesem ist zum Antrieb der Rotor 30 eines Direktantriebmotors 22 angeordnet. Weiter befinden sich auf dem Antriebsorgan drei Exzenter 13,13',13", die in bekannter Art mit entsprechenden Kurvenscheiben 19,19',19" mit einer Vielzahl von beispielsweise zykloiden Kurvenabschnitten zusammenarbeiten und die Kurvenscheiben bei jeder Umdrehung des Antriebsorgans um einen Kurvenabschnitt weiterschalten. Diese Bewegung wird mittels einer Anzahl von Mitnehmerbolzen 33 auf das Abtriebsorgan 29 übertragen. Das so gestaltete Reduktionsgetriebe weist mit oder ohne integriertem Antriebsmotor 22 eine zentrale Öffnung 56 auf, deren Durchmesser in bezug zum Aussendurchmesser des Getriebes gross ist. Dies ist besonders für die Verwendung bei Robotern von grossem Vorteil.

## Patentansprüche

1. Reduktionsgetriebe mit einem einen Aussendurchmesser aufweisenden Getriebegehäuse und einem darin integrierten Direktantriebsmotor sowie mit folgenden weiteren Merkmalen:
- der Direktantriebsmotor (22) weist einen Stator (26) und einen Rotor (30) auf,
- der Rotor (30) ist auf einem Antriebsorgan (11) und der Stator in dem Getriebegehäuse angeordnet,
- das Antriebsorgan (11) ist treibend verbunden mit mindestens einem Exzenter (13,13',13''), welcher jeweils eine Kurvenscheibe (19,19',19") antreibt,
- die jeweilige Kurvenscheibe (19,19',19'') ist mit einer Anzahl von Kurvenabschnitten oder Zähnen (21) versehen,
- innerhalb des Getriebegehäuses sind in einem Kreis in Abständen voneinander stationäre Bolzen (25) oder Zähne angeordnet, deren Anzahl mindestens um eins von der Anzahl der Kurvenabschnitte oder Zähne (21) abweicht und welche bei der Drehung des Exzenters (13) mit den Kurvenabschnitten oder Zähnen (21) zusammenwirken,
- ein Antriebsorgan (29) ist mit der jeweiligen Kurvenscheibe treibend verbunden,
- und das Antriebsorgan (11) weist eine zentrale Bohrung (12) auf,
**dadurch gekennzeichnet, dass**
- der Durchmesser der zentralen Bohrung (12) 30% oder mehr des Aussendurchmessers des Getriebegehäuses beträgt, und dass
- im Getriebegehäuse eine ringförmige Encodervorrichtung (58) angeordnet ist.

2. Reduktionsgetriebe nach Anspruch 1 dadurch gekennzeichnet, dass mindestens das Antriebsorgan (11) oder das Abtriebsorgan (29) oder beide auf einer Hülse (18) bzw. im Gehäuse der anzutreibenden Vorrichtung drehbar gelagert sind.

3. Reduktionsgetriebe nach Anspruch 1 oder 2, dadurch gekennzeichnet, dass zwischen dem Gehäuse (23) und dem Antriebsorgan (11) Dichtungsringe (44,46) vorgesehen sind, welche den Raum (48) abdichten, in welchem sich der Direktantriebsmotor (22) befindet.

4. Reduktionsgetriebe nach Anspruch 3, dadurch gekennzeichnet, dass Dichtungsringe (50,52) zwischen dem Gehäuse (23) und dem Abtriebsorgan (11) vorgesehen sind, welche den Raum (54) abdichten, in welchem sich der oder die Exzenter (13,13',13'') und Kurvenscheiben (19,19',19") befinden.

5. Reduktionsgetriebe nach einem der Ansprüche 1 bis 4, dadurch gekennzeichnet, dass das Antriebs- und das Abtriebsorgan (11,29) mittels Wälzlager (14,16) auf der Hülse (18) drehbar gelagert sind.

6. Reduktionsgetriebe nach Anspruch 5, dadurch gekennzeichnet, dass das Abtriebsorgan (29) weiter mittels eines Wälzlagers (20) auf dem Antriebsorgan (11) gelagert ist.

7. Reduktionsgetriebe nach einem der Ansprüche 3 bis 6, dadurch gekennzeichnet, dass die Encodervorrichtung (58) antriebsseitig, vorzugsweise im Raum (48), in welchem sich der Direktantriebsmotor (22) befindet, angeordnet ist.

8. Reduktionsgetriebe nach Anspruch 7 dadurch gekennzeichnet, dass abtriebsseitig eine weitere Encodervorrichtung (60) angeordnet ist.

9. Reduktionsgetriebe nach Anspruch 7 oder 8, dadurch gekennzeichnet, dass die Encodervorrichtungen (58,60) an eine Auswertschaltung (62) angeschlossen sind, welche Getriebefehler kompensiert und den Antriebsmotor (22)entsprechend steuert.

10. Reduktionsgetriebe nach einem der Ansprüche 7 bis 9, dadurch gekennzeichnet, dass das Gehäuse (23) eine Büchse (32) und einen Deckel (36) aufweist und dass der Deckel (36) eine Nabe (38) zum Befestigen auf der Hülse (18) besitzt.

11. Reduktionsgetriebe nach Anspruch 10, dadurch gekennzeichnet, dass der Deckel (36) zwischen dem Wälzlager (14) für das Antriebsorgan (11) und einem Sicherungsring (42) angeordnet ist.

## Claims

1. Reduction drive with a drive housing having an external diameter and a direct drive motor integrated in the housing, together with the following further features:
- the direct drive motor (22) has a stator (26) and a rotor (30),
- the rotor (30) is arranged on a drive element (11) and the stator is arranged inside the drive housing,
- the drive element (11) is drivingly connected to at least one eccentric disc (13, 13', 13") each of which drives a respective cam (19, 19', 19"),
- each cam (19, 19', 19") is provided with a number of cam sections or teeth (21),
- inside the drive housing stationary pins (25) or teeth are arranged in a circle at intervals from each other, the number of which pins or teeth (25) deviates from the number of cam sections or teeth (21) by at least one, and which interact with the cam sections or teeth (21) when the eccentric disc (13) is rotated,
- a drive [*sic*] element (29) is drivingly connected to the respective cam,
- and the drive element (11) has a central bore (12),
**characterised in that**
- the diameter of the central bore (12) amounts to 30% or more of the external diameter of the drive housing, and in that
- an annular encoder device (58) is arranged inside the drive housing.

2. Reduction drive according to Claim 1, characterised in that at least the drive element (11) or the driven element (29) or both are rotatably mounted on a sleeve (18) or in the housing of the device to be driven.

3. Reduction drive according to Claim 1 or 2, characterised in that sealing rings (44, 46) are provided between the housing (23) and the drive element (11), which rings seal the space (48) in which the direct drive motor (22) is located.

4. Reduction drive according to Claim 3, characterised in that sealing rings (50, 52) are provided between the housing (23) and the driven element (11) [*sic*], which rings seal the space (54) in which the eccentric disc or discs (13, 13', 13") and cams (19, 19', 19") are located.

5. Reduction drive according to one of Claims 1 to 4, characterised in that the drive element and the driven element (11, 29) are mounted rotatably on the sleeve (18) by means of anti-friction bearings (14, 16).

6. Reduction drive according to Claim 5, characterised in that the driven element (29) is further mounted on the drive element (11) by means of an anti-friction bearing (20).

7. Reduction drive according to one of Claims 3 to 6, characterised in that the encoder device (58) is arranged on the drive side, preferably in the space (48) in which the direct drive motor (22) is located.

8. Reduction drive according to Claim 7, characterised in that a further encoder device (60) is arranged on the driven side.

9. Reduction drive according to Claim 7 or 8, characterised in that the encoder devices (58, 60) are connected to an evaluation circuit (62) which compensates for drive errors and controls the drive motor (22) accordingly.

10. Reduction drive according to one of Claims 7 to 9 , characterised in that the housing (23) has a sleeve (32) and a cover (36) and in that the cover (36) has a hub (38) for attaching it to the sleeve (18).

11. Reduction drive according to Claim 10, characterised in that the cover(36) is arranged between the anti-friction bearing (14) for the drive element (11) and a retaining ring (42).

## Revendications

1. Réducteur comprenant un carter de réducteur qui présente un diamètre extérieur et un moteur d'entraînement direct intégré dans ce carter, et possédant les caractéristiques suivantes :
- le moteur d'entraînement direct (22) comprend un stator (26) et un rotor (30),
- le rotor (30) est monté sur un organe d'entrée (11) et le stator dans un carter de réducteur,
- l'organe d'entrée (11) est relié cinématiquement à au moins un excentrique (13, 13', 13") qui entraîne respectivement une came (19, 19', 19"),
- la came respective (19, 19', 19") est munie d'un certain nombre de segments de came ou dents (21),
- à l'intérieur du carter du réducteur, sont disposés, sur un cercle, à distance les unes des autres, des chevilles fixes (25) ou des dents dont le nombre diffère d'au moins un du nombre des segments de came ou dents (21), et qui coopèrent avec les segments de came ou dents (21) lors de la rotation de l'excentrique (13),
- un organe de sortie (29) est relié cinématiquement à la came respective,
- et l'organe d'entrée (11) présente un alésage central (12),
caractérisé en ce que
- le diamètre de l'alésage central (12) représente 30% ou plus du diamètre extérieur du carter du réducteur et en ce que,
- un dispositif encodeur annulaire (58) est agencé dans le carter du réducteur.

2. Réducteur selon la revendication 1, caractérisé en ce qu'au moins l'organe d'entrée (11) ou l'organe de sortie (29) ou les deux est ou sont monté(s) rotatif(s) sur une douille (18) ou à l'intérieur du carter du dispositif à entraîner.

3. Réducteur selon la revendication 1 ou 2, caractérisé en ce qu'entre le carter (23) et l'organe d'entrée (11) sont prévues des bagues d'étanchéité (44, 46) qui enferment à joint étanche l'espace (48) dans lequel se trouve le moteur d'entraînement direct( 22).

4. Réducteur selon la revendication 3, caractérisé en ce que des bagues d'étanchéité (50, 52) sont prévues entre le carter (23) et l'organe de sortie (29) et enferment à joint étanche l'espace (54) dans lequel se trouvent le ou les excentriques (13, 13', 13") et la ou les cames (19, 19', 19").

5. Réducteur selon une des revendications 1 à 4, caractérisé en ce que l'organe d'entrée et l'organe de sortie (11, 29) sont montés rotatifs sur la douille (18) au moyen de roulements (14, 16).

6. Réducteur selon la revendication 5, caractérisé en ce que l'organe de sortie (29) est de plus monté rotatif sur l'organe d'entrée (11) au moyen d'un roulement (20).

7. Réducteur selon une des revendications 3 à 6, caractérisé en ce que le dispositif encodeur (58) est disposé sur le côté d'entrée, de préférence dans l'espace (48) dans lequel se trouve le moteur d'entraînement direct (22).

8. Réducteur selon la revendication 7, caractérisé en ce qu'un autre dispositif encodeur (60) est disposé sur le côté de sortie.

9. Réducteur selon la revendication 7 ou 8, caractérisé en ce que les dispositifs encodeurs (58, 60) sont connectés à un circuit d'analyse (62) qui compense les défauts du réducteur et commande le moteur d'entraînement (22) en conséquence.

10. Réducteur selon une des revendications 7 à 9, caractérisé en ce que le carter (23) présente un boîtier (32) un couvercle (36) et en ce que le couvercle (36) possède un moyeu (38) pour la fixation sur le boîtier (18).

11. Réducteur selon la revendication 10, caractérisé en ce que le couvercle (36) est disposé entre le roulement (14) recevant l'organe d'entrée (11) et une bague d'arrêt (42).
